(19) Europäisches Patentamt

European Patent Office

Office européen des brevets

(11) EP 1 182 479 B1

(12) **EUROPÄISCHE PATENTSCHRIFT**

(45) Veröffentlichungstag und Bekanntmachung des Hinweises auf die Patenterteilung:
**14.01.2004 Patentblatt 2004/03**

(51) Int Cl.⁷: $G02B\ 6/42$, G02B 6/30

(21) Anmeldenummer: **00440227.7**

(22) Anmeldetag: **11.08.2000**

(54) **Modenfeldumwandler für eine höchsteffiziente Kopplung in optischen Modulen**

Modes converter for higher coupling efficiency in optical moduls

Convertisseur de modes pour une plus grande efficacité de couplage dans les modules optiques

(84) Benannte Vertragsstaaten:
**AT BE CH CY DE DK ES FI FR GB GR IE IT LI LU MC NL PT SE**

(43) Veröffentlichungstag der Anmeldung:
**27.02.2002 Patentblatt 2002/09**

(73) Patentinhaber: **Avanex Corporation Fremont, CA 94538 (US)**

(72) Erfinder:
• **Ambrosy, Anton, Dr.**
  **75233 Tiefenbronn (DE)**
• **Lestra, Alexis, Dr.**
  **91400 Orsay (FR)**

(74) Vertreter: **Haines, Miles John et al**
  **D. Young & Co.**
  **21 New Fetter Lane**
  **London EC4A 1DA (GB)**

(56) Entgegenhaltungen:
**EP-A- 0 903 602       FR-A- 2 760 850**
**US-A- 5 402 511       US-A- 5 720 893**
**US-A- 5 930 423**

EP 1 182 479 B1

**Beschreibung**

Die Erfindung bezieht sich auf ein optisches Modul nach dem Oberbegriff des Anspruches 1.

Optische Module zur Verarbeitung von Lichtsignalen enthalten unterschiedliche optische Komponenten, wie reine optische oder optoelektrische Komponente z.B. optoelektrische Umwandler (meistens Laserdioden oder Photodioden), Verstärker oder Modulatoren. Solche Komponenten werden mit optischen Fasern, üblicherweise Glasfasern, gegebenenfalls auch Kunststofffasern, gekoppelt. Von der Qualität dieser Kopplung hängt unter anderem die Leistung solcher optischer Module ab.

Da der Durchmesser des Modenfeldes am Ein- und/oder Ausgang (im Folgenden Ein-/Ausgang abgekürzt) von solchen Komponenten deutlich kleiner ist, als der des Modenfeldes im Kern der optischen Faser wurden unterschiedliche Techniken zur Optimierung der Kopplung entwickelt. Es ist längst Stand der Technik den Ein-/Ausgang der optischen Komponente mit einem Wellenleiter zu versehen, dessen der optischen Faser zugewandtes Ende verjüngt, z.B. kegelstumpfförmig, oder verbreitet verläuft. Hierbei kann gegebenenfalls der Wellenleiter mit dem Kern der optischen Faser auf der gleichen Achse liegen. Dank der schrägen Flächen an der Verjüngung (z.B. an dem Kegelstumpf) wird das Modenfeld von dem daraus strahlenden Licht vergrößert, um im idealen Fall einen Durchmesser zu erzielen, der gleich ist mit dem des Modenfeldes am Eingang der optischen Faser. Es wird entsprechend von Modenfeldumwandlern gesprochen ("spot-size converter" oder "taper"). Solche verjüngte/verbreitete Enden werden meistens direkt in der selben Schicht (z.B. in eine Halbleiterschicht aus dotiertem InP) in der die optische Komponente gebildet wurde, entweder vertikal oder horizontal oder sogar in beiden Richtungen der Ebene strukturiert (siehe z.B. H. Oohashi et al., ECOC97, n° 448, Seite 351-354, 1997).

Es ist auch Stand der Technik (siehe z.B. DE 34 15 576) miniaturisierte Linsen als Modenfeldumwandler zu verwenden. Dadurch kann der Wirkungsgrad dieser Kopplung erheblich gesteigert werden. Doch leidet die Verwendung von miniaturisierten Linsen an der recht schlechten Justierung. Entsprechend hoch ist der Aufwand, um eine zufriedenstellende Kopplung bei den hohen Toleranzanforderungen zu erreichen.

Eine Kombination von Taper-artigen Modenfeldumwandler und miniaturisierten Linsen ermöglicht teilweise eine gute Kopplung. Nur bleibt die Problematik der Justierung im Zusammenhang mit der miniaturisierten Linse vorhanden. Dadurch können die Kosten von solchen konzipierten optischen Modulen nicht genügend gesenkt werden. Dies bleibt ein erhebliches Hindernis für deren Weiterentwicklung.

Der Erfindung liegt die Aufgabe zugrunde, ein optisches Modul weiterzuentwickeln, bei dem die Kopplung zwischen daraufliegenden optischen Komponenten und hierzu ausgerichteten optischen Fasern höchst effizient ist, ohne die Kosten von solchen optischen Modulen zu sehr zu belasten.

Die Aufgabe wird erfindungsgemäß durch ein optisches Modul nach der Lehre des Anspruches 1 gelöst.

Das Zwischenschalten eines zusätzlichen Modenfeldumwandlers zwischen dem Ein-/Ausgang der optischen Komponente und die dazu zu koppelnde optische Faser ermöglicht einen hohen Wirkungsgrad für eine solche Kopplung, ohne nachteilige Ausrichtungsfehler besonders am Rande des Modenfeldes zu bekommen, wie dies der Fall ist bei der Verwendung einer miniaturisierten Linse. Zudem wird dieser zusätzliche Modenfeldumwandler üblicherweise auf das optische Modul mit gängigen Techniken platziert. Hierfür kann dieser zusätzliche Modenfeldumwandler separat hergestellt sein, um danach auf das optische Modul gelötet oder geklebt zu werden.

Es kann aber auch besonders vorteilhaft sein, diesen Modenfeldumwandler direkt im optischen Modul zu integrieren. Hierfür wird dann der Modenfeldumwandler in ähnlicher Art und Weise wie z.B. bei optischen Wellenleitern auf solchen optischen Modulen strukturiert. Dabei sind solche optischen Module meistens auf eine als Träger dienende Siliziumscheibe (Siwafer) aufgebaut. Die optischen Wellenleiter werden dann wie bekannt auf solche Siliziumscheiben integriert, unter anderem durch einen Schichtaufbau von verschieden dotierten Silikatgläsern ($SiO_2$, $SiON$, ....). Dadurch erleichtert sich erheblich die Ausrichtung der unterschiedlichen Komponenten auf ein solches optisches Modul wie auch deren Verpackung ("packaging"), unter anderem im Vergleich mit der Verwendung von miniaturisierten Linsen.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter Zuhilfenahme der beiliegenden Zeichnungen weiter erläutert.

Es zeigen:

Fig. 1    eine schematische Draufsicht eines erfindungsgemäßen optischen Moduls zusammen mit einer Vergrößerung der Wellenleiter,

Fig. 2a    eine Draufsicht des erfindungsgemäßen optischen Moduls,

Fig. 2b    eine Seitenansicht des erfindungsgemäßen optischen Moduls nach Fig. 2a.

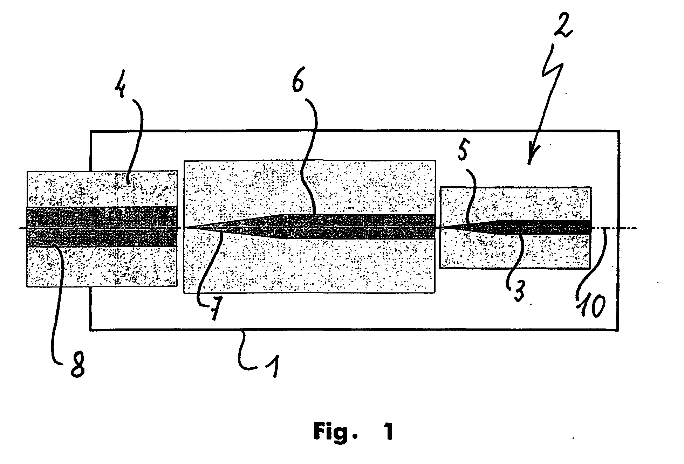

In Figur 1 ist ein optisches Modul 1 in Draufsicht gezeigt, wobei alle Wellenleiter zur Klarheit vergrößert dargestellt sind. Gegebenenfalls kann diese Draufsicht auch nur einen Teil (Ausschnitt) eines optischen Moduls bilden. In dem Ausführungsbeispiel in der Figur 1 ist eine optische Komponente 2 skizziert. Diese optische Komponente 2 umfasst auch einen optischen Wellenleiter 3, der den einen Ein-/Ausgang dieser optischen Komponente 2 bildet. Zu diesem optischen Wellenleiter 3 ist eine optische Faser 4 auf das optische Modul 1 gerichtet, die mit der optischen Komponente 2 zu koppeln ist.

Zwischen der optischen Faser 4 und der optischen Komponente 2 befindet sich ein erfindungsgemäß zusätzlicher optischer Wellenleiter 6. Dieser dazwischenliegende Wellenleiter 6 ist derart ausgerichtet, dass dessen optische Achse parallel zu einer Achse 10 liegt, auf der die optischen Achsen sowohl der optischen Faser 4 als auch des optischen Wellenleiters 3 der optischen Komponente 2 liegen.

Dieser dazwischenliegende optische Wellenleiter 6 dient als Modenfeldumwandler. In der Tat ist das Modenfeld, das aus einem Kern 8 der optischen Faser 4 resultiert, deutlich größer, als das Modenfeld am Ein-/Ausgang der optischen Komponente 2. Der dazwischen liegende optische Wellenleiter 6 ist derart gewählt, dass dessen Modenfeld einen Durchmesser $D_{II}$ aufweist, der größer als der Durchmesser $D_I$ des Modenfeldes des optischen Wellenleiters 3 der optischen Komponente 2 und kleiner als der Durchmesser $D_{III}$ des Modenfeldes im Kern 8 der optischen Faser 4 ist. Vorteilhafterweise kann dieser Durchmesser $D_{II}$ nach dem folgenden Formel definiert werden:

$$D_{II} = \sqrt{D_I \times D_{III}}$$

Um die Kopplung zwischen der optischen Faser 4 und der optischen Komponente 2 höchst effizient zu gestalten, ist der optische Wellenleiter 3 der optischen Komponente 2 an dem der optischen Faser 4 zugewandten Ende 5 konisch ausgebildet. Dieses verjüngte Ende 5 ("taper"), hier konischförmig gezeichnet, doch in Wirklichkeit nach Art eines Kegelstumpf gebildet, ist auf die Achse 10 zentriert. Es ist durchaus möglich, Taper zu verwenden, deren Endflächen jeweils die Fläche eines Paraboloides oder eines Hyperboloides bilden. Der dazwischenliegende optische Wellenleiter 6 wird in ähnlicher Weise an dem der optischen Faser 4 zugewandten Ende 7 konisch ausgeführt. Dieses verjüngte Ende 7 ist auch auf die Achse 10 zentriert. Somit wird erfindungsgemäß das Modenfeld in zwei Schritten vergrößert, angefangen am Ein-/Ausgang der optischen Komponente 2 bis zur optischen Faser 4.

Üblicherweise beträgt der Durchmesser D, des Modenfeldes am Ein-/Ausgang der optischen Komponente 2 typischerweise 2μm. Durch die Verjüngung am Ende 5 des optischen Wellenleiters 3 der optischen Komponente 2 vergrößert sich der Durchmesser des Modenfeldes bis zu ungefähr 6μm. Eine stärkere Vergrößerung ist in einem Schritt nicht zu erzwingen. Doch da typischerweise der Durchmesser $D_{III}$ von optischen Fasern wie Glasfasern ungefähr 10μm beträgt, wird mit dem dazwischenliegenden optischen Wellenleiter 6 das Modenfeld weiter vergrößert. Hierfür ist dann der Durchmesser $D_{II}$ des dazwischenliegenden optischen Wellenleiters 6 mit einer Größe von ungefähr 6μm gewählt. Der Kern dieses Wellenleiters 6 außerhalb des verjüngten oder verbreiteten Bereiches weist einen Durchmesser von 2 bis 7μm vorzugsweise 5μm auf.

Das entsprechend verjüngte Ende 7 dieses dazwischenliegenden optischen Wellenleiters 6 wird den Durchmesser des Modenfeldes weiter bis ungefähr 10μm vergrößert. Mit der Verwendung dieses dazwischenliegenden optischen Wellenleiters 6 als Modenfeldumwandler gelingt es, Verluste bei der Übertragung von Lichtsignalen zwischen der optischen Faser 4 und der optischen Komponente 2 des optischen Moduls 1 erheblich zu verringern. Dabei ist es nicht zwingend die verjüngten Enden 5,7 auf die Achse 10 zu zentrieren. Es ist auch möglich asymmetrische Verjüngungsformen zu wählen, wie z.B. die eines ungeraden elliptischen Paraboloides.

Dieser dazwischenliegende optische Wellenleiter 6 kann aus unterschiedlich dotierten Silikatschichten (z.B. $SiO_2$) hergestellt werden. Gegebenenfalls kann er auf dem optischen Modul 1 entweder geklebt oder gelötet fixiert werden. Vorteilhafterweise kann jedoch dieser dazwischenliegende optische Wellenleiter 6 direkt im optischen Modul 1 strukturiert werden. Dementsprechend kann dies gleichzeitig mit der Strukturierung von anderen optischen Komponenten auf diesem optischen Modul erfolgen. Dies ermöglicht eine höchst effiziente Kopplung zwischen der optischen Faser 4 und der optischen Komponente 2, ohne dabei die Komplexität des optischen Modul zu erhöhen. Wenn der dazwischenliegende optische Wellenleiter 6 im optischen Modul 1 integriert ist, vereinfacht sich die Justierung entlang der Achse 10 entsprechend.

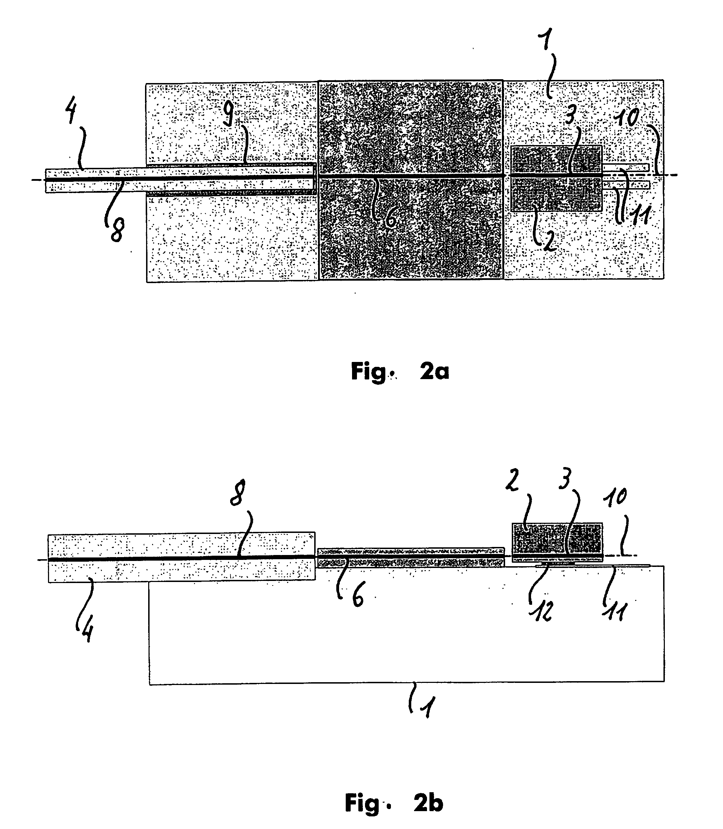

Auf Figuren 2a und 2b ist ein Beispiel eines solchen optischen Moduls 1 gezeigt, bei dem alle optischen Wellenleiter 3, 6, 8 direkt auf einer gemeinsamen Montageplattform, z.B. Si-Substrat aufgebaut werden. Bei der hier verwendeten optischen Komponente 2 handelt es sich, um eine optoelektrische Komponente, z.B. eine Laserdiode. Sie werden bevorzugt auf dem gemeinsamen Träger flipchip gebondet. In der Seitenansicht auf Fig. 2b ist die optische (optoelektrische) Komponente 2 auf einem Bump 12 gelegen aus der zwei Zuleitungen 11 herausragen. Letztere dienen zur elektrischen Versorgung der optoelektrischen Komponente. Die optische Faser 4, z.B. eine Glasfaser, wird passiv in eine vorstrukturierte Nut 9 vor die optischen Wellenleiter 3, 6 montiert.

Dieser erfindungsgemäße Aufbau ist sowohl für die Kopplung von optischen Fasern mit rein optischen Komponenten wie einem Verstärker oder einem Modulator. als auch mit einer optoelektronischen Komponente wie z.B. einem Diodenlaser anwendbar.

Falls für die optische Faser 4 anstelle einer Glasfaser eine Kunststofffaser verwendet wird, kann es zweckmäßig sein, nicht nur einen einzigen erfindungsgemäßen Modenfeldumwandler dazwischen zu positionieren, sondern mehrere solcher ähnlicher Modenfeldumwandler kaskadiert aneinander zu reihen. Dies ermöglicht, den Durchmesser des Modenfeldes von 6μm bis zu wesentlich größeren Durchmessern progressiv zu vergrößern. Dadurch kann die Größe des Durchmessers des Modenfeldes einer Kunststofffaser erreicht werden. Hierfür wird dann der Modenfelddurchmesser außerhalb des konischen Bereichs des jeweiligen dazwischenliegenden optischen Wellenleiters von der optischen Komponente zur optischen Faser zunehmen.

Es ist durchaus möglich einen erfindungsgemäßen Aufbau sowohl beim Eingang als auch beim Ausgang einer optischen Komponente eines optischen Moduls entsprechend zu konzipieren. Dies hängt nur davon ab, ob eine Modenfeldanpassung sowohl beim Eingang als auch beim Ausgang der optischen Komponente benötigt wird. Falls dies in der Tat so ist, wird der in den Figuren gezeigte Aufbau zusätzlich in analoger Art und Weise erweitert. Damit ist klar, dass dieser Aufbau, wie in den Figuren dargestellt ist, sowohl für Lichtsignale, die von der optischen Faser 4 zur optischen Komponente 2 oder umgekehrt verlaufen, anwendbar ist. Die vorliegende Erfindung deckt nicht nur den Fall ab, wenn der als Modenfeldumwandler dienende Bereich - das Ende 7 - des dazwischenliegenden optischen Wellenleiters 6 konischförmig gebildet ist, sondern auch andere Formen von Verjüngung oder Verbreitung, wie sie in diesem Zusammenhang wohl bekannt sind.

## Patentansprüche

1. Optisches Modul (1), das eine optische Komponente (2) mit mindestens einem optischen Ein- und/ oder Ausgang und eine optische Faser enthält, wobei ein optischer Ein- und/oder Ausgang zu einer optischen Faser (4) gerichtet ist, und dieser Einund/ oder Ausgang einen optischen Wellenleiter (3) aufweist, dessen der optischen Faser (4) zugewandtes Ende (5) für eine Modenfeldanpassung in einer Richtung verjüngt oder verbreitert ausgebildet ist, **dadurch gekennzeichnet, daß** zwischen dem optischen Wellenleiter (3) der optischen Komponente (2) und der optischen Faser (4) ein zusätzlicher optischer Wellenleiter (6) liegt, dessen der optischen Faser (4) zugewandtes Ende (7) für eine Modenfeldanpassung in der gleichen Richtung verjüngt oder verbreitert ausgebildet ist.

2. Optisches Modul (1) nach Anspruch 1, **dadurch gekennzeichnet, dass** das verjüngte oder verbreiterte Ende (7) des dazwischenliegenden optischen Wellenleiters (6) kegelstumpfförmig ausgebildet ist.

3. Optisches Modul (1) nach Anspruch 1, **dadurch gekennzeichnet, dass** der dazwischenliegende optische Wellenleiter (6) zumindest teilweise aus Silikat besteht.

4. Optisches Modul (1) nach Anspruch 1, **dadurch gekennzeichnet, dass** der dazwischenliegende optische Wellenleiter (6) im optischen Modul (1) integriert ist.

5. Optisches Modul (1) nach Anspruch 1, **dadurch gekennzeichnet, dass** das Modenfeld im dazwischenliegenden optischen Wellenleiter (6) einen Durchmesser $D_{II}$ außerhalb des verjüngten oder verbreiterten Bereiches aufweist, der durch die folgende Formel bestimmt ist:

$$D_{II} = \sqrt{D_I \times D_{III}}$$

wobei $D_I$ der Durchmesser des Modenfeldes des optischen Wellenleiters (3) der optischen Komponente (2) außerhalb des verjüngten oder verbreiterten Bereiches ist, und $D_{III}$ der Durchmesser des Modenfeldes im Kern (8) der optischen Faser (4).

6. Optisches Modul (1) nach Anspruch 1, **dadurch gekennzeichnet, dass** der dazwischenliegende optische Wellenleiter (6) einen Kern außerhalb des verjüngten oder verbreiterten Bereiches mit einem Durchmesser von 2 bis 7μm aufweist.

7. Optisches Modul (1) nach Anspruch 1, **dadurch gekennzeichnet, dass** die optische Komponente (2) als Laser, Verstärker oder Modulator ausgebildet ist.

8. Optisches Modul (1) nach Anspruch 1, **dadurch gekennzeichnet, dass** der dazwischenliegende optische Wellenleiter (6) zur Modenfeldanpassung von Licht dient, das entsprechend der Funktion der optischen Komponente (2) entweder von der optischen Faser (4) zur optischen Komponente (2) oder umgekehrt verläuft.

9. Optisches Modul (1) nach Anspruch 1, **dadurch gekennzeichnet, dass** es bei einer optischen Faser (4) aus Kunststoff, bei der der Modenfelddurchmesser des Kerns deutlich größer als 10 μm ist, mindestens zwei dazwischenliegende optische Wellenleiter (6) in Reihe angeordnet sind, wobei der Modenfelddurchmesser außerhalb des verjüngten oder verbreiterten Bereiches der jeweiligen dazwischenliegenden optischen Wellenleiter von der optischen Komponente zur optischen Faser (4) zunimmt.

## Claims

1. Optical module (1) that contains an optical component (2) having at least one optical input and/or output, and an optical fibre, wherein an optical input and/or output is directed towards an optical fibre (4) and said input and/or output has an optical waveguide (3) whose end (5) facing the optical fibre (4) is tapered or expanded in a direction for the purpose of mode-field matching, **characterized in that** an additional optical waveguide (6) whose end (7) facing the optical fibre (4) is tapered or expanded in said direction for the purpose of mode-field matching is situated between the optical waveguide (3) of the optical component (2) and the optical fibre (4).

2. Optical module (1) according to Claim 1, **characterized in that** the tapered or expanded end (7) of the intervening optical waveguide (6) is of truncated-cone structure.

3. Optical module (1) according to Claim 1, **characterized in that** the intervening optical waveguide (6) is composed at least partly of silicate.

4. Optical module (1) according to Claim 1, **characterized in that** the intervening optical waveguide (6) is integrated in the optical module (1).

5. Optical module (1) according to Claim 1, **characterized in that** the mode field in the intervening optical waveguide (6) has, outside the tapered or expanded region, a diameter $D_{II}$ that is determined by the following formula:

$$D_{II} = \sqrt{D_I \times D_{III}},$$

where $D_I$ is the diameter of the mode field of the optical waveguide (3) of the optical component (2) outside the tapered or expanded region and $D_{III}$ is the diameter of the mode field in the core (8) of the optical fibre (4).

6. Optical module (1) according to Claim 1, **characterized in that** the intervening optical waveguide (6) has, outside the tapered or expanded region, a core having a diameter of 2 to 7 µm.

7. Optical module (1) according to Claim 1, **characterized in that** the optical component (2) is constructed as a laser, amplifier or modulator.

8. Optical module (1) according to Claim 1, **characterized in that** the intervening optical waveguide (6) serves to match the mode field of light that, according to the function of the optical component (2), proceeds either from the optical fibre (4) to the optical component (2) or vice versa.

9. Optical module (1) according to Claim 1, **characterized in that**, in the case of a plastic optical fibre (4) in which the mode-field diameter of the core is markedly larger than 10 µm, at least two intervening optical waveguides (6) are disposed in series, wherein the mode-field diameter outside the tapered or expanded region of the respective intervening optical waveguide increases from the optical component to the optical fibre (4).

**Revendications**

1. Module optique (1), qui comprend un composant optique (2) avec au moins une entrée et/ou une sortie optique et une fibre optique, une entrée et/ou une sortie optique étant dirigée vers une fibre optique (4), et cette entrée et/ou sortie présentant un guide d'onde optique (3) dont l'extrémité (5) dirigée vers la fibre optique (4), pour une adaptation du champ de mode, est d'une configuration rétrécie ou élargie dans une direction, **caractérisé en ce qu'**entre le guide d'onde optique (3) du composant optique (2) et la fibre optique (4), se trouve un guide d'onde optique (6) supplémentaire, dont l'extrémité (7) dirigée vers la fibre optique (4), pour une adaptation du champ de mode, est d'une configuration rétrécie ou élargie dans la même direction.

2. Module optique (1) selon la revendication 1, **caractérisé en ce que** l'extrémité (7) rétrécie ou élargie du guide d'onde optique (6) intermédiaire ou interposé, est d'une forme tronconique.

3. Module optique (1) selon la revendication 1, **caractérisé en ce que** le guide d'onde optique (6) intermédiaire est au moins partiellement constitué de silicate.

4. Module optique (1) selon la revendication 1, **caractérisé en ce que** le guide d'onde optique (6) intermédiaire est intégré au module optique (1 ).

5. Module optique (1) selon la revendication 1, **caractérisé en ce que** le champ de mode dans le guide d'onde optique (6) intermédiaire présente un diamètre $D_{II}$ en-dehors de la zone rétrécie ou élargie, qui est défini par la formule suivante :

$$D_{II} = \sqrt{D_I \times D_{III}},$$

$D_I$ étant le diamètre du champ de mode du guide d'onde optique (3) du composant optique (2) en-dehors de la zone rétrécie ou élargie, et $D_{III}$, le diamètre du champ de mode dans l'âme (8) de la fibre optique (4).

**6.** Module optique (1) selon la revendication 1, **caractérisé en ce que** le guide d'onde optique (6) intermédiaire présente une âme, en-dehors de la zone rétrécie ou élargie, d'un diamètre de 2 à 7 µm.

**7.** Module optique (1) selon la revendication 1, **caractérisé en ce que** le composant optique (2) est réalisé en tant que laser, amplificateur ou modulateur.

**8.** Module optique (1) selon la revendication 1, **caractérisé en ce que** le guide d'onde optique (6) intermédiaire sert à l'adaptation du champ de mode de lumière, qui, conformément à la fonction du composant optique (2), se propage soit de la fibre optique (4) vers le composant optique (2), soit inversement.

**9.** Module optique (1) selon la revendication 1, **caractérisé en ce que** dans le cas d'une fibre optique (4) en matière plastique, pour laquelle le diamètre du champ de mode de l'âme est nettement plus grand que 10 µm, au moins deux guides d'onde optiques (6) intermédiaires sont montés en série, le diamètre du champ de mode en-dehors de la zone rétrécie ou élargie des guides d'onde optiques intermédiaires respectifs, augmentant du composant optique vers la fibre optique (4).

**Fig. 1**

**Fig. 2a**

**Fig. 2b**